**Europäisches Patentamt**

**European Patent Office**

**Office européen des brevets**

(11) Numéro de publication: **0 198 725**
**A1**

# (12) DEMANDE DE BREVET EUROPEEN

(21) Numéro de dépôt: **86400276.1**

(22) Date de dépôt: **10.02.86**

(51) Int. Cl.⁴: **H 01 G 1/14**

(30) Priorité: **19.03.85 FR 8504020**

(43) Date de publication de la demande: **22.10.86**
**Bulletin 86/43**

(84) Etats contractants désignés: **BE DE GB IT**

(71) Demandeur: **DUCELLIER ET CIE, 3/5 Voie Félix Eboué, F-94000 Creteil (FR)**

(72) Inventeur: **Heritier-Best, Pierre, Orbeil, F-63500 Issoire (FR)**

(74) Mandataire: **Habert, Roger, VALEO Service Propriété Industrielle 21 rue Auguste Blanqui, F-93406 Saint-Ouen (FR)**

(54) **Condensateur électrique.**

(57) Condensateur électrique du type constitué par un boîtier étanche cylindrique et conducteur à l'intérieur duquel est disposé un enroulement définissant deux faces d'extrémités de polarités différentes dont l'une positive est reliée électriquement à un fil de sortie par l'intermédiaire d'un organe de contact qui lui est solidaire et qui assure, après interposition d'une rondelle isolante intercalaire, la fermeture du boîtier, caractérisé en ce que l'organe de contact (7) est constitué par un corps métallique creux dans lequel est engagée l'extrémité dénudée (6a) du fil de sortie (6) et sertie ensuite par écrasement dudit corps.

# CONDENSATEUR ELECTRIQUE

La présente invention concerne un condensateur électrique du type constitué par un boîtier étanche cylindrique et conducteur obtenu de manière connue par bobinage de deux bandes conductrices décalées et isolées entre elles et définissant deux faces d'extrémités étamées de polarités différentes dont l'une d'elles est reliée électriquement à un fil de sortie par l'intermédiaire d'un organe de contact qui lui est solidaire et qui assure, après interposition d'une rondelle isolante intercalaire, la fermeture du boîtier.

Dans les condensateurs connus de ce type, notamment commercialisés par la demanderesse sous la référence 1203, l'extrémité du fil de sortie est d'abord dénudée puis introduite dans un trou central de l'organe de contact. Les brins de cuivre constituant l'âme du fil et ainsi dénudés sont alors ébouriffés volontairement par un opérateur avant de procéder à l'opération de soudage de ladite extrémité sur l'organe de contact, ceci afin de constituer, par infiltration de matière de soudage dans les brins, une soudure d'un certain volume.

Le principal inconvénient d'une telle méthode réside dans le fait que la constitution d'un tel sous-ensemble de connexion, fil-organe de contact, ne peut être que manuelle, ce qui est incompatible avec une production en chaîne, dont les opérations successives doivent être mécanisées.

Le but de la présente invention vise à atteindre ce résultat et concerne à cet effet un condensateur constitué par un boîtier étanche cylindrique et conducteur à l'intérieur duquel est disposé un enroulement obtenu de manière connue par bobinage de deux bandes conductrices décalées et isolées entre elles et définissant deux faces d'extrémités de polarités différentes dont l'une d'elles est reliée électriquement à un fil de sortie par l'intermédiaire d'un organe de contact qui lui est solidaire et qui assure, après interposition d'une rondelle isolante intercalaire, la fermeture du boîtier, caractérisé en ce que l'organe de contact est constitué par un corps métallique creux dans lequel est engagé l'extrémité du fil de sortie dénudée et serti ensuite par écrasement dudit corps.

Selon une autre caractéristique de l'invention le corps métallique creux constituant l'organe de contact est une cuvette circulaire emboutie dont le fond présente une protubérance interne axiale apte à faire dévier au montage l'extrémité du fil de sortie vers le bord périphérique de la cuvette avant de rabattre ce dernier sur ledit fil lors du sertissage.

La description qui va suivre en regard des dessins annexés fera mieux comprendre comment l'invention peut être réalisée.

La figure 1 est une vue en coupe d'un condensateur suivant l'invention.

La figure 2 est une vue en coupe à plus grande échelle d'un sous-ensemble de connexion.

La figure 3 est une vue représentant les étapes successives de réalisation du sous-ensemble de connexion suivant la figure 2.

La figure 4 représente, vu en plan, un sous-ensemble de connexion suivant un autre mode de réalisation.

La figure 5 est une vue en coupe suivant la ligne AA de la figure 4.

La figure 6 représente une vue en coupe suivant un autre mode de réalisation du sous-ensemble de connexion.

La figure 7 est une vue représentant les étapes successives de réalisation du sous-ensemble suivant la figure 6.

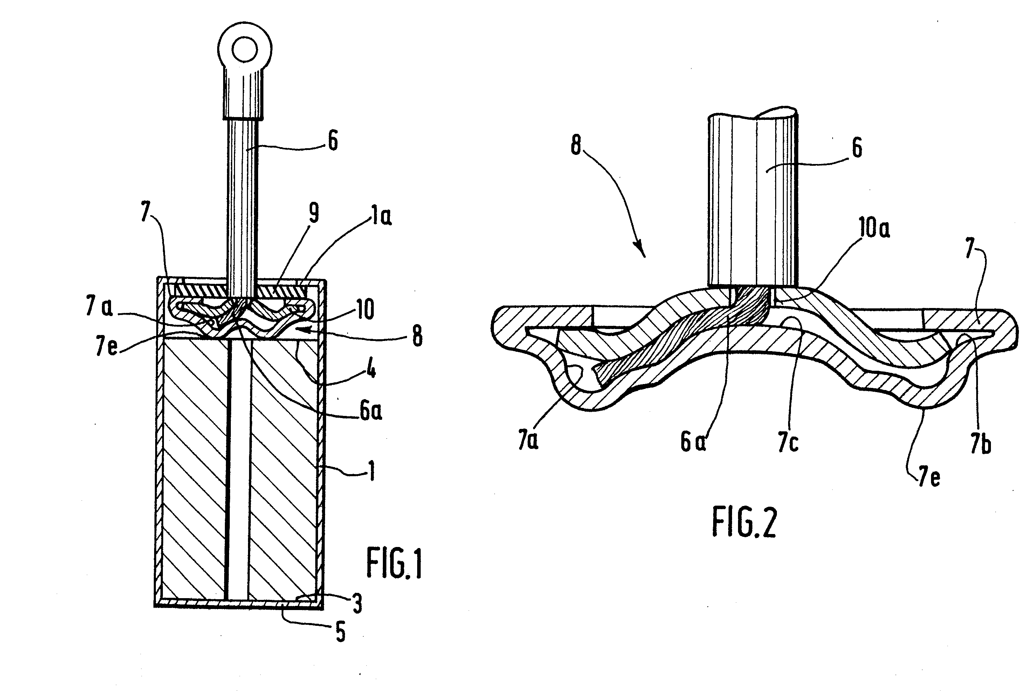

Le condensateur représenté sur la figure 1 comporte un boîtier métallique 1 cylindrique étanche à l'intérieur duquel est disposé un enroulement 2 obtenu de manière connue par bobinage de deux bandes décalées et isolées entre elles et définissant deux faces d'extrémités étamées 3,4 de polarités différentes. L'une 3 étant en contact avec le fond 5 du boîtier 1 constitue la polarité négative. L'autre extrémité 4 positive est reliée électriquement à un fil de sortie 6 par l'intermédiaire d'un organe de contact 7 pour constituer un sous-ensemble de connexion 8 serti ultérieurement sur le boîtier 1 après interposition d'une rondelle isolante 9 pour assurer la fermeture du boîtier 1. Le sous-ensemble 8 de connexion, que l'on peut voir figure 2, comprend l'organe de contact 7 constitué par un corps métallique creux en forme de cuvette dans laquelle est disposée une rondelle circulaire 10 munie d'un trou central 10a traversé par l'extrémité 6a du fil de sortie 6.

Le corps métallique creux constituant l'organe de contact 7 est une cuvette circulaire emboutie dont le fond présente une protubérance interne axiale de contour circulaire permettant la déviation de la partie dénudée 6a du fil de sortie 6 vers le bord périphérique interne 7a de l'organe 7 en forme de cuvette.

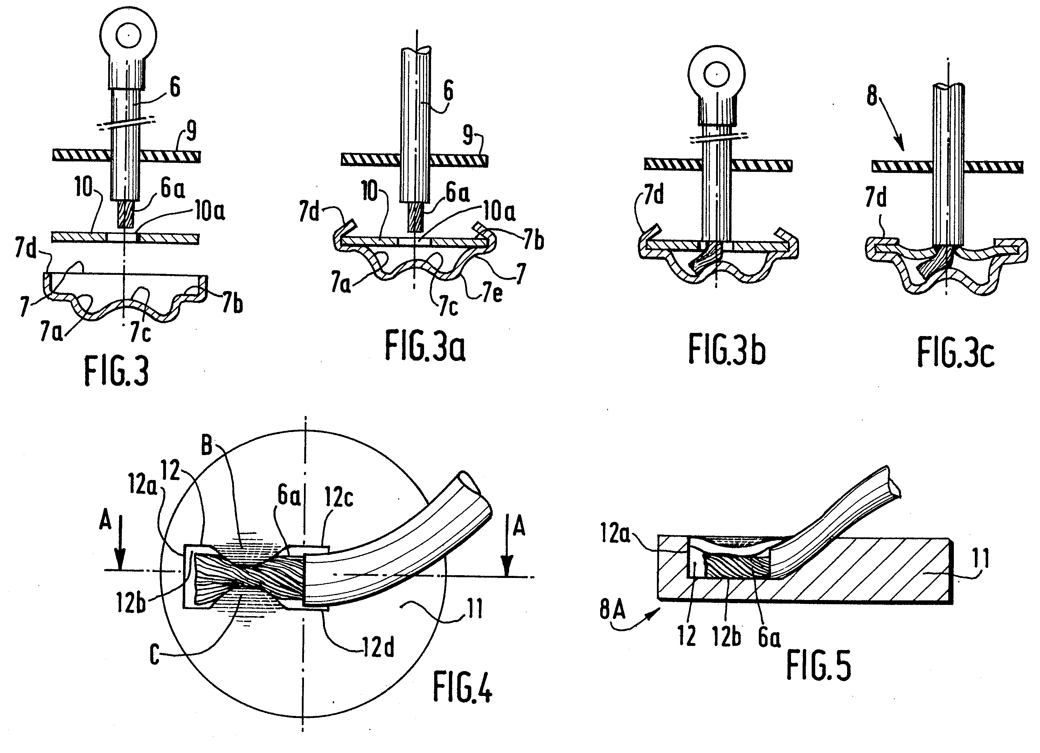

Selon les figures 3 montrant les phases successives de montage du sous-ensemble 8, la rondelle métallique 10 est posée sur un rebord périphérique 7b de la cuvette 7 et subit un présertissage partiel, approximativement à 45° afin qu'elle soit maintenue en position lors du passage du fil de sortie 6. Le fil de sortie 6 prémuni de la rondelle isolante 9 est introduit dans la rondelle métallique 10 par le trou 10a prévu à cet effet. La partie dénudée 6a du fil 6 vient en contact avec le fond de la cuvette 7 et est dévié par la protubérance interne axiale 7c dans une direction quelconque vers le bord périphérique interne 7a de la cuvette 7 (figure 3b). Le sertissage définitif des bords extérieurs 7d de la cuvette 7 par écrasement simultané de la rondelle métallique 10 sur le fil de sortie dénudé 6a peut alors être effectué (figure 3c).

Ce sous-ensemble 8 ainsi constitué est introduit dans le boîtier 1 avec la rondelle isolante 9, boîtier 1 subissant alors une opération de sertissage par rabat du bord périphérique 1a sur la rondelle 9 permettant ainsi la liaison dudit fil de sortie 6 avec la face positive 4 du bobinage 2 par l'intermédiaire de la couronne extérieure 7e de la cuvette 7 dont il est solidarisé.

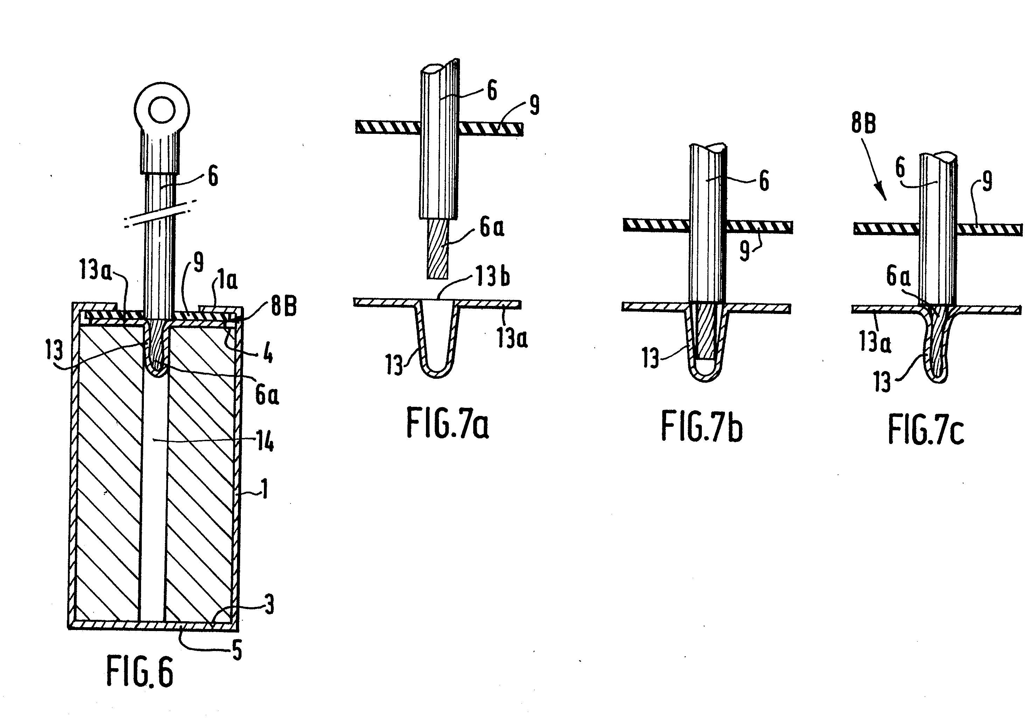

Le sous-ensemble de connexion 8A représenté aux figures 4 et 5 diffère de la réalisation précédente en ce que le corps métallique constituant l'organe de contact 11 est une pastille plate circulaire évidée à sa partie supérieure par la fente 12 longitudinale et axiale pratiquée sur la face supérieure de la pastille 11 et allant approximativement du centre jusqu'à un rebord périphérique 12a, fente dans laquelle vient se loger l'extrémité 6a dénudée du fil de sortie 6. L'extrémité dénudée 6a du fil de sortie 6 placée lors du montage au centre de la pastille 11, vient se coucher sur le fond 12b de la fente 12 en direction du rebord extérieur périphérique 12a de la pastille 11 (figure 5). Le fil de sortie 6 ainsi disposé est serti ensuite par écrasement des côtés 12c, 12d de la fente 12 ayant pour conséquence le fluage de la matière dans des zones B et C de la pastille 11 assurant ainsi le sertissage par recouvrement dudit fil de sortie 6.

Le mode de montage du sous-ensemble de connexion suivant ce dernier mode de réalisation s'effectuant comme précédemment.

Selon un autre mode de réalisation représenté aux figures 6 et 7, le sous-ensemble de connexion 8B diffère des réalisations précédentes en ce que le corps métallique constituant l'organe de contact creux est un fourreau 13 borgne conique obtenu de matière avec une collerette 13a de contact circulaire plate à sa partie supérieure ouverte et possédant en son centre le trou 13b dudit fourreau. L'extrémité du fil de sortie dénudée 6a est placée au-dessus du trou 13b de la collerette 13a et est introduit dans le fourreau 13 (figures 7a, 7b). Le fil de sortie ainsi disposé peut être serti par écrasement latéral du fourreau 13 de manière à conserver l'étanchéité de l'ensemble (figure 7c).

Ce sous-ensemble de connexion 8B ainsi constitué est introduit dans le boîtier 1 avec la rondelle isolante 9, le fourreau 13 pénétrant dans la cavité axiale 14 engendrée lors de l'opération de bobinage et d'un diamètre déterminé approximativement égal audit fourreau 13 jusqu'à ce que la collerette 13a vienne en contact électrique avec la face d'extrémité positive 4 dudit bobinage 2.

L'opération de sertissage du boîtier 1 peut alors être effectuée comme précédemment.

REVENDICATIONS

1. Condensateur électrique du type constitué par un boîtier étanche cylindrique et conducteur à l'intérieur duquel est disposé un enroulement obtenu de manière connue par bobinage de deux bandes conductrices décalées et isolées entre elles et définissant deux faces d'extrémités étamées de polarités différentes dont l'une d'elles est reliée électriquement à un fil de sortie par l'intermédiaire d'un organe de contact qui lui est solidaire et qui assure après interposition d'une rondelle isolante intercalaire, la fermeture du boîtier, caractérisé en ce que l'organe de contact (7) est constitué par un corps métallique creux dans lequel est engagée l'extrémité dénudée (6a) du fil de sortie (6) et serti ensuite par écrasement dudit corps.

2. Condensateur selon la revendication 1, caractérisé en ce que le corps métallique creux constituant l'organe de contact (7) est une cuvette circulaire emboutie dont le fond présente une protubérance interne axiale (7c) apte à faire dévier au montage l'extrémité (6a) du fil de sortie (6) vers le bord périphérique (7a) de la cuvette avant de rabattre ce dernier sur ledit fil lors du sertissage.

3. Condensateur selon la revendication 2, caractérisé en ce qu'une rondelle métallique (10) munie d'un trou central (10a) est disposée dans la cuvette préalablement à l'introduction du fil de sortie (6).

4. Condensateur selon la revendication 3, caractérisé en ce que la rondelle métallique (10) fait l'objet d'un sertissage partiel préalable de manière à faciliter l'introduction du fil de sortie (6) avant sertissage définitif.

5. Condensateur selon la revendication 1, caractérisé en ce que le corps métallique creux constituant l'organe de contact (11) est une pastille évidée à sa partie supérieure par une fente (12) longitudinale dans laquelle se loge l'extrémité du fil de sortie dénudé (6a) pour être serti ensuite par écrasement au droit de ladite fente (12).

6. Condensateur selon la revendication 1, caractérisé en ce que le corps métallique creux constituant l'organe de contact est constitué par un fourreau borgne (13) obtenu de matière avec une collerette de contact (13a) à sa partie supérieure ouverte et apte à recevoir l'extrémité du fil de sortie dénudée (6a) pour être serti ensuite par écrasement dudit fourreau (13), de manière qu'au montage le fourreau (13) pénètre dans la cavité axiale (14) engendrée lors de l'opération de bobinage et d'un diamètre déterminé approximativement égal audit fourreau (13) jusqu'à ce que la collerette (13a) vienne en contact avec une des faces d'extrémités (4) dudit bobinage (2).

FIG.1

FIG.2

0198725

FIG.3

FIG.3a

FIG.3b

FIG.3c

FIG.4

FIG.5

2/3

0198725

FIG.6

FIG.7a

FIG.7b

FIG.7c

0198725

**Office européen des brevets**

**RAPPORT DE RECHERCHE EUROPEENNE**

0198725
Numéro de la demande

EP 86 40 0276

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | GB-A- 538 538 (ISAAC SMITH JR) * Page 2, lignes 53-62 * | 1 | H 01 G 1/14 |
| A | | 2-3 | |
| | --- | | |
| A | DE-A-2 338 522 (ROBERT BOSCH GmbH) * Revendications 1,2 * | 1 | |
| | --- | | |
| X | DE-B-1 018 123 (SIEMENS & HALSKE) * Colonne 1, ligne 1 - colonne 2, ligne 29 * | 1 | |
| | --- | | |
| X | DE-C- 913 450 (FELTEN & GUILLEAUME CARLSWERK A.G.) * Page 2, lignes 75-87; figure 7 * | 6 | |
| | --- | | **DOMAINES TECHNIQUES RECHERCHES (Int. Cl.4)** |
| A | GB-A- 927 547 (DUBILIER CONDENSER Co. LTD) | | H 01 G |
| | --- | | |
| A | GB-A-1 118 967 (THE TELEGRAPH CONDENSER Co. LTD) | | |
| | --- | | |
| A | DE-A-2 748 388 (ROBERT BOSCH GmbH) | | |
| | --- -/- | | |

Le présent rapport de recherche a été établi pour toutes les revendications

| Lieu de la recherche | Date d'achèvement de la recherche | Examinateur |
|---|---|---|
| LA HAYE | 24-06-1986 | SCHUERMANS N.F.G. |

0198725
Numéro de la demande

Office européen
des brevets

RAPPORT DE RECHERCHE EUROPEENNE

EP 86 40 0276

## DOCUMENTS CONSIDERES COMME PERTINENTS

Page 2

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-2 887 670 (PATTON MacGUYER Co.) | | |

----

DOMAINES TECHNIQUES RECHERCHES (Int. Cl.4)

Le présent rapport de recherche a été établi pour toutes les revendications

| Lieu de la recherche | Date d'achèvement de la recherche | Examinateur |
|---|---|---|
| LA HAYE | 24-06-1986 | SCHUERMANS N.F.G. |